# EUROPEAN PATENT SPECIFICATION

(11) **EP 4 373 291 B1**
(45) Date of publication and mention of the grant of the patent: **30.09.2026**
(21) Application number: 22743840.5
(22) Date of filing: 20.07.2022
(51) Int. Cl.: A23J 3/14, A23C 9/13, A23C 9/154, A23L 13/40, A23L 29/206

(54) **PEA AND RAPESEED PROTEIN ISOLATE**
PROTEINISOLAT AUS ERBSEN- UND RAPS-PROTEINEN
ISOLAT DE PROTÉINES DE POIS ET DE COLZA

(30) Priority: 22.07.2021 EP 21187273
(43) Date of publication of application: 29.05.2024
(73) Proprietor: DSM IP Assets B.V., 6221 BE Maastricht (NL)
(72) Inventor: SCHEFFELAAR, Max Hans, 6100 AA Echt (NL); ABELLO, Nicolas Jean-Robert, 6100 AA Echt (NL); SEIN, Arjen, 6100 AA Echt (NL)
(74) Representative: dsm-firmenich IP
(86) International application number: PCT/EP2022/070353
(87) International publication number: WO 2022/200639

(56) References cited:
- WO-A1-2018/007494
- WO-A1-2021/009387
- WO-A1-2021/119498
- WO-A1-2022/126231
- WO-A1-2022/180070
- WO-A1-2022/195015
- CN-A- 111 615 337

## Description

### Field of the invention

The present invention is directed to a protein isolate comprising at least 80% of protein on dry weight comprising pea protein and rapeseed protein and the use thereof. Further the present invention relates to the use of pea and rapeseed protein.

### Background of the invention

Protein is a main ingredient of human nutrition. This may be sourced from animals (e.g. meat, fish, egg, dairy) or vegetables. There is a general desire to reduce the amount of animal-based protein.

The use of egg protein is often undesirable. For example, due to problems with egg allergies, medical problems associated with cholesterol levels in eggs, religious restrictions/convictions, culinary preferences (such as, for example, a vegetarian or a vegan diet), cost fluctuations in the price of eggs, use of antibiotics and hormones in poultry production, and diseases associated with poultry (such as, for example, bird flu), the use of alternative proteins may be desired.

The use of vegetable-based protein in human nutrition is known, for example WO 2008/094434 discloses the use of wheat protein isolates as an alternative to the use of egg yolk protein in compositions. However, the use of wheat protein isolates may not be desirable for those with gluten allergies. The use of soy-based protein instead of whey protein has also been described for example in WO 2014/018922. Soy protein is widely used however in view of some intolerances to soy products there is a need to find other sources of vegetable proteins.

Proteins are available as flours, protein-enriched flours, concentrates, isolates and hydrolysates. Isolates are purer than concentrates, meaning other non-protein components have been partially removed to "isolate" the protein. Many concentrates are below 80% protein, which means that on a dry basis, 80% of the total weight is protein. Isolates are typically above 80% protein, such as around 90% protein (dry basis). Hydrolysates are proteins that have been partially broken down by exposing the protein to heat, acid or enzymes that break apart the bonds linking amino acids. This makes it taste more bitter, but also allows it to be absorbed more rapidly during digestion than a native (non-hydrolyzed) protein. This crude protein content is usually calculated based on total nitrogen determination using Kjeldahl or Dumas methods, and a nitrogen-to-protein conversion factor of 6.25.

Suitable alternatives include pea protein and rapeseed protein. Rapeseed seeds are rich in oil and contain considerable amounts of protein that accounts for 17 to 25% of seed dry weight. Processing rapeseed for oil for human consumption produces rapeseed meal as a by-product which contains about 30 to 40% protein. The rapeseed used for this purpose is usually of the varieties *Brassica napus* and *Brassica juncea.* These varieties contain only low levels of erucic acid and glucosinolate, and are also known as Canola. Canola is a contraction of Canada and ola, for "oil low acid", but is now a generic term defined as rapeseed oil comprising <2% erucic acid and <30 mmol/g glucosinolate. The resultant rapeseed meal is currently used as a high-protein animal feed.

The predominant storage proteins found in rapeseed are cruciferins and napins (S.P. Perera, T.C. Mclntosh, J.P.D. Wanasundra, Plant 2016, 5, p36, "Structural Properties of Cruciferin and Napin of Brassica napus (Canola) Show Distinct Responses to Changes in pH and Temperature"). Cruciferins are globulins and are the major storage protein in the seed. It is composed of 6 subunits and has a total molecular weight of approximately 300 kDa. Napins are albumins and are a low molecular weight storage protein with a molecular weight of approximately 14 kDa. Napins are more easily solubilized and in for example EP 1715752B1 a process is disclosed to separate out the more soluble napin fraction, preferably to at least 85 wt.%. Napins are primarily proposed for use used in applications where solubility is key. DE 10 2014 005466 A1 also describes a process for obtaining purified cruciferin and napin fractions. During the process, also a protein mixture of the two with 55-60% napins and 40-45% cruciferins is obtained. The solubility of this protein mixture is approximately 75%.

Rapeseed proteins can be also divided into various fractions according to the corresponding sedimentation coefficient in Svedberg units (S). This coefficient indicates the speed of sedimentation of a macromolecule in a centrifugal field. For rapeseed proteins, the main reported fractions are: 12S, 7S and 2S. Cruciferin and napin are the two major families of storage proteins found in canola/rapeseed. Napin is a 2S albumin, and cruciferin is a 12S globulin. Rapeseed protein isolates are known from e.g., WO 2018/007494 A1.

Pea protein, obtained from yellow pea *Pisum sativum,* is also a mixture of various proteins (see for instance Lam et al. Food Rev. International 2018 34(2) p126-147), consisting of globulins (70-80%) and albumins (10-20%). The globulin fraction consists of several proteins: Legumin (11S, 300-400 kDa), vicilin (7S, 150-170 kDa) and convicilin (210 kDa as trimer), the water-soluble albumin fraction consists of proteins with molecular masses up to 80 kDa comprising enzymes protease- and amylase inhibitors and lectins. Furthermore, a small fraction consists of among others prolamins and glutenins. The method of extraction highly influences the composition of the protein concentrate or isolate, as well as its physico-chemical properties and its flavour. The general process for producing a pea protein isolate is known in the art and described for instance by Frederikson et al. (J. Agric. Food Chem. 2001, 49, p1208-1212 *Production Process for High-Quality Pea-Protein Isolate with Low Content of Oligo saccharides and Phytate).* Several industrial methods to obtain isolates are described such as WO2020221978 (Gelling leguminous protein), US2020229462 (Pea protein composition having improved nutritional quality), EP3071045 B1 (Method for extracting pea proteins), US2020281224 (Product analogs or components of such analogs and processes for making same).

It has been found that high purity rapeseed protein isolate has a broadly-based functionality in food products, unique among proteinaceous materials. The ability to utilize a protein which is vegetable in origin in food products enables truly vegetarian food products to be provided in instances where egg white and/or animal-derived protein have been used in the absence of any available substitute.

The rapeseed protein isolate may be used in conventional applications of protein isolates, such as protein fortification of processed foods, emulsification of oils, body formers in baked foods and foaming agents in products which entrap gases. The rapeseed protein isolate also has functionalities not exhibited by the source material and isoelectric precipitates. The rapeseed protein isolate has certain functionalities, including the ability to be used as a protein substitute or extender in food products where animal protein or other plant proteins are used. As described herein, the rapeseed protein isolate provided herein has additional functionalities.

Gelation is a key functionality of proteins for many applications where the protein - dispersed or dissolved in water or in the aqueous environment of the food product, increases the firmness of food products and builds texture. Gelation of a protein can take place through various mechanisms - depending on the type and concentration of the protein, such as acid gelation: texture build up upon decreasing the pH, by which protein can flocculate (around their iso-electric point) and form a gel, commonly found for proteins like milk protein (yoghurt) and some soy proteins (for instance a soy-based yogurt alternative); heat set gelation: texture build up upon heating by which proteins can denature and thus form a gel. Heat set gelation occurs for many proteins and is more effective for proteins that have a substantial level of nativity.

Applications in foods can be as wide as contributing to texture build up in dairy alternative products such as yoghurt alternatives (microbially or chemically acidified), cheese alternatives (soft cheese alternative, cream cheese alternative, semi-hard cheese alternatives, hard cheese alternatives), in vegetable-based creams such as a sour cream alternative, in desserts such as puddings or custards or fillings in bakery products, in meat alternatives such as the filler or the binder phase in sausages, burger-style patties, nuggets meat balls and the like, in dressings and sauces, in bakery products such as cakes and cookies, in confectionary such as nougat or in protein bars or cereal bars.

In many of these cases the advantage of using a protein instead of for instance carbohydrates to build texture is that proteins often also adds emulsification capability (oil droplet break up, and stabilization of oil/water interfaces), aeration (foaming, gas cell formation in liquids or semi-solids, stabilization of air/water interfaces), and nutritional value.

WO2021/009387 describes a composition comprising rapeseed protein isolate and/or rapeseed protein concentrate and legume-derived protein isolate and/or legume-derived protein concentrate and plant-based fiber.

WO2021/119498 describes a method for producing a meat substitute, the method comprising the steps of (a) admixing water and protein powder to produce a protein slurry; (b) homogenizing the slurry with at least one fat to produce a pea protein emulsion; (c) drying the emulsion to produce a solid-state emulsion; and (d) admixing the solid-state emulsion with water and at least one transglutaminase to produce an admixture which, after an incubation period of from about 15 minutes to about 8 hours, comprises a meat substitute composition.

However, there is a need in the art for protein isolates providing better gelation capacities.

It has been found by the present inventors that combining rapeseed protein with pea protein gave surprisingly good results and improved the gelation capacity of both rapeseed protein or pea protein. The gel strength of the heat-set gel of the mixture is higher than the gel strength of the heat set gel of the individual components (at equal protein concentrations).

### Description of the Figure

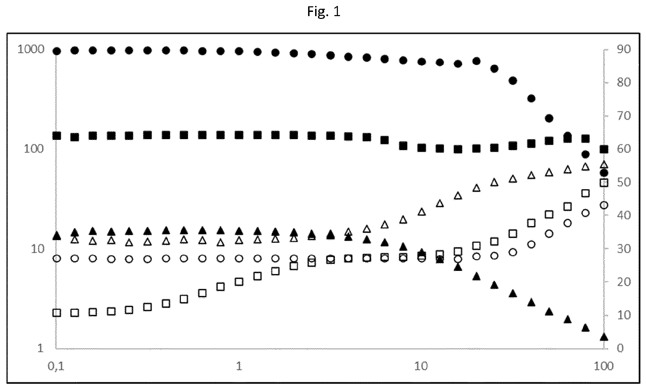

Figure 1. Strain sweep at 0.1 Hz measured after heat-set gelation in the rheometer of various protein isolates in 10% (w/w) aqueous solution. The X-axis represents the amplitude of the oscillation in %, the left Y-axis shows the complex modulus G* in Pascal [Pa] and the closed figures represent the G* of the particular heat-set gel; the right Y-axis shows the phase angle expressed in degrees [°] and the open symbols represent the corresponding values of the heat-set gel. Markers: circles represent 10% pea protein isolate plus rapeseed protein isolate (80/20 w/w); squares, 10% rapeseed protein isolate; triangles, 10% pea protein isolate.

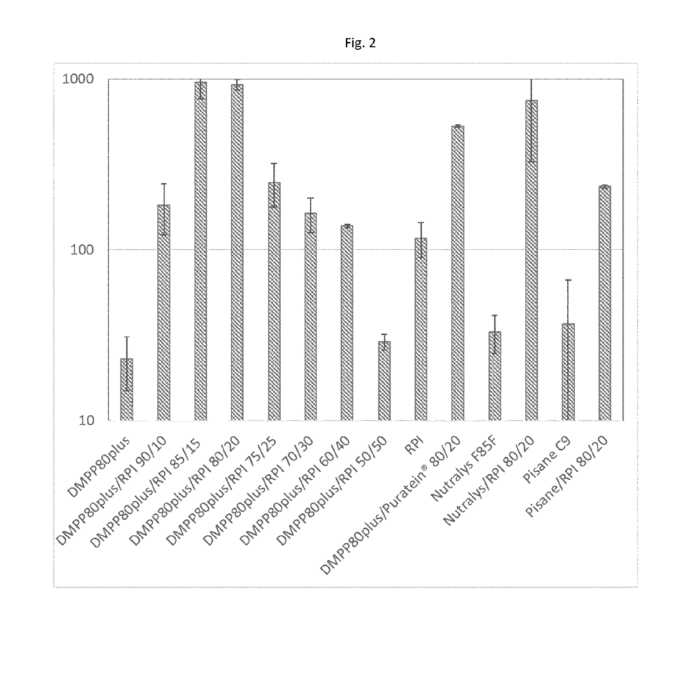

Figure 2. Complex modulus G* [Pa], Y-axis, of heat set gels made of 10% protein solutions or dispersions, single protein isolates as well as mixed protein isolates. The composition of protein isolates is shown in table 2.

### Detailed description of the invention

The present invention relates to a protein isolate comprising at least 80% of protein on dry weight comprising pea protein and rapeseed protein, wherein the ratio of pea protein to rapeseed protein is within the range of 70:30 to 95:5 (w/w). In other words, the present invention relates to a protein isolate comprising at least 80% of protein on dry weight, comprising pea protein and rapeseed protein, wherein the weight ratio of pea protein to rapeseed protein is within the range of 70:30 to 95:5.

The present protein isolate comprises at least 75, 76, 77, 78, 79 or at least 80% of protein on dry weight. Preferably the amount of protein is calculated based on total nitrogen determination using Kjeldahl or Dumas methods, and a nitrogen-to-protein conversion factor of 6.25.

Preferably, the present protein isolate comprises at least 80% of protein on dry weight, preferably at least 82%, or even at least 85%. For example, the protein isolate comprises between 80 and 99% protein on dry weight, such as between 82 and 95% protein on dry weight, such as between 83 and 90% protein on dry weight or between 85 and 90% protein on dry weight.

Preferably, the pea protein and/or rapeseed protein are native proteins. Preferably, the pea protein and/or rapeseed protein are not denatured.

Alternatively, the present ratio of pea protein to rapeseed protein is within the range of 50:50 to 95:5 (w/w), 60:40 to 90:10 (w/w) or 65:35 to 85:15 (w/w).

Preferably, the present ratio of pea protein to rapeseed protein is within the range of 71:29 to 94:6 (w/w), 72:28 to 93:7 (w/w), 73:27 to 92:8 (w/w), 74:26 to 91:9 (w/w), 75:25 to 90:10 (w/w), 75:25 to 89:11 (w/w); 75:25 to 88:12 (w/w); 75:25 to 87:13 (w/w) or 75:25 to 86:14 (w/w). Preferably is within the range of 80:20 to 94:6 (w/w), 81:19 to 93:7 (w/w), 82:18 to 92:8 (w/w), 83:17 to 91:9 (w/w), 84:16 to 90:10 (w/w), 85:15 to 89:11 (w/w); 86:14 to 88:12 (w/w).

In a preferred embodiment, the present the ratio of pea protein to rapeseed protein is within the range of 75:25 to 90:10 (w/w). Preferably, the present ratio of pea protein to rapeseed protein is within the range of 76:24 to 89:11 (w/w), 77:23 to 88:12 (w/w); 78:22 to 87:13 (w/w) or 79:21 to 86:11 (w/w); 80:20:90:10 (w/w). Preferably, the present ratio of pea protein to rapeseed protein is within the range of 75:25 to 85:15, 76:24 to 84:16 (w/w), 77:23 to 83:17 (w/w); 78:22 to 82:18 (w/w) or 79:21 to 81:19 (w/w).

The present protein isolate can be composed by the skilled person by blending rapeseed protein isolate and pea protein isolate. For example, 800 gram pea protein isolate can be blended with 200 gram rapeseed protein isolate. It is advantageous to provide a blended product in view of the improved gelation that is provided, and because it reduces difficulties for food producers in blending powders in their production lines.

Preferably the present protein isolate is packed in a container. Preferably a container with at least 200 gram of protein isolate, such as at least 500 gram of protein isolate. Preferably the present protein isolated is packed in a container of between 1 and 50 kg. For example, the present protein isolate is packed in bags of 1 to 50 kg, preferably 5 to 25 kg.

In a preferred embodiment, at least 80% (w/w) of the protein in the protein isolate consists of pea protein and rapeseed protein. Preferably at least 81%, 82%, 83%, 84%, 85%, 86%, 87%, 88%, 89%, 90%, 91%, 92%, 93%, 94%, 95%, 96%, 97%, 98% or at least 99% (w/w) of the protein in the protein isolate consists of pea protein and rapeseed protein. In other words, the protein in the present protein isolate comprises substantially only pea and canola protein.

In another embodiment, the present protein in the protein isolate comprises a further plant protein. Preferably in an amount of less than 20%, 19%, 18%, 17%, 16%, 15%, 14%, 13%, 12%, 11%, 10%, 9%, 8%, 7%, 6%, 5%, 4%, 3%, 2% (w/w) or less than 1% (w/w) of the protein. Preferably the present protein isolate does not comprise a further plant protein. A further plant protein can be selected from the list of fava bean protein, lentil protein, chickpea protein, sunflower protein, potato protein, lupin protein, peanut protein, kidney bean protein, green bean protein, green bean protein, mung bean protein, grass protein, sugar beet protein.

In another embodiment, the present protein in the protein isolate comprises a further protein. Preferably in an amount of less than 20%, 19%, 18%, 17%, 16%, 15%, 14%, 13%, 12%, 11%, 10%, 9%, 8%, 7%, 6%, 5%, 4%, 3%, 2% (w/w) or less than 1% (w/w) of the protein. Preferably the present protein isolate does not comprise a further protein. A further protein can be selected from the list of algae protein, microbial protein, fermented protein, protein hydrolysate, cultivated protein, protein obtained via precision fermentation.

In another embodiment, the present protein in the protein isolate comprises soy protein. Preferably in an amount of less than 20%, 19%, 18%, 17%, 16%, 15%, 14%, 13%, 12%, 11%, 10%, 9%, 8%, 7%, 6%, 5%, 4%, 3%, 2% (w/w) or less than 1% (w/w) of the protein. Preferably the present protein isolate does not comprise soy protein. Preferably, the present protein isolate does not comprise wheat protein and/or gluten protein.

In a preferred embodiment, the present protein isolate in a 10% (w/w) aqueous solution has a heat-set gel strength with a complex modulus G* of at least 200 Pa, preferably according to rheology test 1. The term 10% (w/w) aqueous solution means an aqueous solution, preferably, water, having a protein isolate concentration of 10% (such as 10 gram protein isolate in 90 gram water). The 10% (w/w) aqueous solution preferably comprises from 8 to 9% (w/w) protein, (since a protein isolate generally comprises 80 to 95% protein.) Preferably, the complex modulus G* is at least 300 Pa, at least 400 Pa, at least 500 Pa, at least 600 Pa, at least 700 Pa, at least 800 Pa, according to rheology test 1. Preferably, the complex modulus G* of a 10% protein dispersion in water is within the range of 200 to 2000 Pa, 300 to 1800 Pa, 400 to 1600 Pa, 500 to 1400 Pa, 600 to 1200 Pa or 700 to 1100 Pa.

Alternatively, the present protein isolate in an aqueous solution with a protein concentration of 8%, of 9% or of a protein concentration within 8-10% or 8-9% (w/w) has a heat-set gel strength with a complex modulus G* of at least 200 Pa, preferably according to rheology test 1. Preferably, the complex modulus G* is at least 300 Pa, at least 400 Pa, at least 500 Pa, at least 600 Pa, at least 700 Pa, at least 800 Pa, according to rheology test 1. Preferably the complex modulus G* is within the range of 200 to 2000 Pa, 300 to 1800 Pa, 400 to 1600 Pa, 500 to 1400 Pa, 600 to 1200 Pa or 700 to 1100 Pa.

In a preferred embodiment, the present rheology test 1 consists of:
- preparing a dispersion by dispersing the protein isolate in demineralized water to a concentration of 10% protein isolate (or 8%, 9% or between 8 and 10% (w/w) or between 8 and 9% (w/w) protein concentration) and stirring for 60 minutes at 600 rpm at room temperature, followed by adjusting the pH to 6.8 using diluted (0.1 or 1N) NaOH or HCl;
- filling a rheometer with the prepared dispersion;
- determining the complex modulus G* during steps 1 to 5 using the following settings: and determine the gel strength as the complex modulus G* [Pa] from the linear viscoelastic region in step 5.

| Step | Temperat ure [°C] | Frequency [Hz] | Strain γ [%] | # of points | Time per point [s] | Total time of the phase [s] | Heating rate [°C/min] |
|---|---|---|---|---|---|---|---|
| 1 | 25 → 95°C | 1 | 0.1 | 70 | 30 | 2100 | 2 |
| 2 | 95°C | | | 20 | 30 | 600 | 0 |
| 3 | 95 → 25°C | | | 70 | 30 | 2100 | -2 |
| 4 | 25°C | 0.1 | | 10 | 60 | 600 | 0 |
| 5 | 25°C | | 0.1 → 100 logarithmically | 31 (10 points/ decade) | Set by rheometer | Set by rheometer | 0 |

Preferably, rheology test 1 is carried out using dynamic oscillatory rheology, preferably using an Anton Paar Physical rheometer MCR302, preferably with a cup and bob geometry (CC27).

Preferably, the measurement was performed by filling the cup with 17-20 mL protein dispersion.

Preferably, the sample in the cup was covered with a thin layer of sunflower oil, to prevent samples from drying out during the experiment.

The effectiveness of the gelation can be monitored by heating the protein solution (or dispersion) in a casing, such as a tube or another mould, and after the gel has been heat-set and cooled down, releasing the gel from the casing and measure the firmness by for instance compression rheology, such as by a texture analyser, like a Stable Micro Systems Texture Analyser, or by a tension and compression instrument such as made by Instron. An alternative method is by using shear rheometry, by which the protein solution or dispersion is heated in the rheometer with the measuring probe contacting the solution or dispersion to a pre-set temperature, kept there to heat set, cool down to for instance room temperature or 5°C, and then the modulus can be measured by an oscillation method. Such an oscillation method can be for instance a strain sweep where the amplitude of the oscillation is varied while the frequency is kept constant. With this method the strength of the gel is expressed as the modulus, a combination of elastic modulus (G') and viscous modulus (G"), usually expressed as the complex shear modulus G* that describes the entire viscoelastic behavior. In addition, the *Linear ViscoElastic* region (LVE) indicates the amplitude range the heat-set gel can sustain without destroying the structure of the sample. This is a measure for the elasticity of a sample, a brittle product has a low LVE and a highly elastic product like rubber has a high LVE.

In a preferred embodiment, the present pea protein comprises globulins (legumins, vicilins and convicilins) and albumins. Preferably 70-80% (w/w) globulins and 10-20% (w/w) albumins, on the weight of the pea protein.

In a preferred embodiment the present rapeseed protein comprises cruciferins and napins.

In a preferred embodiment the present (weight) ratio of cruciferins to napins in the present protein isolate is within the range of 10:90 to 95:5 (w/w) or 10:90 to 80:20 (w/w). Preferably in the range of 20:80 to 80:20 (w/w), such as 30:70 to 80:20 (w/w).

In a preferred embodiment the present (weight) ratio of cruciferins to napins in the protein isolate is within the range of 40:60 to 65:35 (w/w), or 40:60 to 60:40 (w/w) such as 45:55 to 59:41 (w/w).

In another preferred embodiment, the present (weight) ratio of cruciferins to napins in the protein isolate is within the range of 60:40 to 80:20 (w/w), such as 60:40 to 75:25 (w/w) or such as 65:35 to 75:25 (w/w). An example of such a rapeseed protein is Puratein^{©} as used in the example below. Other examples is Puratein^{©} C.

In another preferred embodiment, the present (weight) ratio of cruciferins to napins in the protein isolate is within the range of 50:50 to 99:1 (w/w), such 80:20 to 95:5 (w/w), such as 85:15 to 95:5 (w/w) or such as 90:10 to 98:2 (w/w). An example of such a rapeseed protein is Puratein^{©} G as used in the example below. Alternatively, the present (weight) ratio of cruciferins to napins in the protein isolate is within the range of 50:50 to 80:20 (w/w).

Preferably the amount of cruciferins and napins is determined by Blue Native Page, HP-SEC or by sedimentation velocity (SV-AUC).

In a preferred embodiment, the present rapeseed protein comprises 40 to 65 wt. % cruciferins and 35 to 60 wt. % napins (of the rapeseed protein). Preferably, the present rapeseed protein comprises 40 to 55 wt. % cruciferins and 45 to 60 wt. % napins.

In a preferred embodiment, the present rapeseed protein comprises 60 to 95 wt. % cruciferins and 5 to 40 wt. % napins. Preferably, the present rapeseed protein comprises 80 to 90 wt. % cruciferins and 10 to 20 wt. % napins, such as around 90% cruciferins and 10% napins. An example of such a rapeseed protein is Puratein^{®}G.

In a preferred embodiment, the present rapeseed protein (does not) comprise(s) 1 to 20 wt. % cruciferins and 80 to 100 wt. % napins. Preferably, the present rapeseed protein (does not) comprise(s) 1 to 10 wt. % cruciferins and 90 to 100 wt. % napins. Preferably, the present rapeseed protein (does not) comprise(s) 1 to 5 wt. % cruciferins and 95 to 100 wt. % napins. Preferably, the present rapeseed protein (does not) comprise(s) around 15 wt. % cruciferins and around 85 wt. % napins. In other words, the present rapeseed protein (does not) comprise(s) an amount of napins of more than 80% of the rapeseed protein, such as more than 85%, more than 90% or even more than 95%. Puratein^{®}HS is a rapeseed protein comprising only napins as the product is the result from the supernatant in a protein micellar mass (PMM) precipitation step as for example described in EP2323499.

Preferably, the present protein isolate does not comprise rapeseed protein having a protein profile which is:
60 to 95% (w/w) of 2S protein;
5 to 40% (w/w) of 7S protein; and
0 to 55 (w/w) of 12S protein, of the rapeseed protein, and/or having a LAB colour value of L is >75, A is -0.5 to 1.5, B is 18 to 24. Such as a LAB value of 80 (L), 0.3 (A) and 20 (B). Preferably the present protein isolate does not comprise rapeseed protein having a L value of >75, such as 80.

Preferably, the amounts of cruciferins and napins are calculated based on the total amount of rapeseed protein. Or alternatively, the amounts of cruciferins and napins are calcuated based on the sum of cruciferins and napins present in the rapeseed protein. Preferably, the amounts of cruciferins and napins are determined by size exclusion chromatography (SEC). Preferably, the amounts of cruciferins and napins are determined by size exclusion chromatography (SEC) using the following test:
samples of protein isolate are dissolved in a 500 mM NaCl saline solution and analyzed by High Performance SEC using the same solution as the mobile phase, followed by detection using measuring UV absorbance at 280 nm, wherein the relative contribution of cruciferin and napin (wt. %) was calculated as the ratio of the peak area of each protein with respect to the sum of both peak areas.

Preferably, the amounts of 12S and 2S is determined by sedimentation velocity analytical ultracentrifugation (SV-AUC) analysis. Preferably, the amounts of 12S and 2S is determined by sedimentation velocity analytical ultracentrifugation (SV-AUC) analysis using the following test: samples of protein isolate are dissolved in a 3.0% (or 500 mM) NaCl saline solution and amounts determined using interference optics.

Preferably, the present rapeseed protein comprises 20 to 65 wt. % 12S and 20 to 65 2S. Preferably, the present rapeseed protein comprises 40 to 65 wt. % 12S and 25 to 60 wt. % 2S. Preferably, the present rapeseed protein comprises 40 to 55 wt. % 12S and 45 to 60 wt. % 2S.

In a preferred embodiment, the present rapeseed protein comprises 40 to 80 wt. % 12S and 20 to 40 wt. % 2S. Preferably, the present rapeseed protein comprises 45 to 75 wt. % 12S and 25 to 35 wt. % 2S.

In a preferred embodiment, the present rapeseed protein (does not) comprise(s) 0 to 20 wt. % 12S and 80 to 100 wt. % 2S. Preferably, the present rapeseed protein (does not) comprise(s) 0 to 10 wt. % 12S and 90 to 100 wt. % 2S. Preferably, the present rapeseed protein (does not) comprise(s) 1 to 5 wt. % 12S and 95 to 100 wt. % 2S. Preferably, the present rapeseed protein (does not) comprises around 15 wt. % 12S and around 85 wt. % 2S.

In one embodiment, the present rapeseed protein has a solubility of at least 88%, preferably at least 90%, more preferably at least 94% and most preferably at least 96% when measured over a pH range from 3 to 10 at a temperature of 23±2°C. This is also known as the soluble solids index (SSI).

Preferably the pea protein and/or rapeseed protein isolate is substantially unhydrolyzed. By substantially unhydrolyzed is meant that the protein is not deliberately hydrolyzed.

In another preferred embodiment, the present protein isolate has a phytate level less than 2.0% (w/w), preferably less than 1.8% (w/w), less than 1.6% (w/w), less than 1.4% (w/w), less than 1.2% (w/w), less than 1.0% (w/w), less than 0.8% (w/w), less than 0.6% (w/w) or even less than 0.4% (w/w). Preferably, the present protein isolate has phytate level within the range of 0.1 to 2.0% (w/w), such as 0.2 to 1.5% (w/w), such as 0.3 to 1.0% (w/w).

In a preferred embodiment, the present protein isolate has an amount of moisture of less than 10%, preferably less than 9%, less than 8%, less than 7%, less than 6%, less than 5%, less than 4%, less than 3%, less than 2% or even less than 1%. Such as between 1 and 6%, or between 2 and 5%.

In a preferred embodiment, the present protein isolate comprises an amount of gliadin of less than 100 ppm, preferably less than 50 ppm, more preferably less than 20 ppm, such a less than 10 ppm. Preferably the present protein isolate does not comprise wheat gluten.

In a preferred embodiment the present protein isolate comprises less than 10% (w/w), such as less than 5% (w/w) such as less than 1% (w/w) sucrose, starch, calcium phosphate or NaCl.

In another embodiment, the present protein isolate is substantially free from dietary fibers, such as pea fiber. For example, the present protein isolate comprises less than 5% (w/w) dietary fiber, preferably less than 1% (w/w) dietary fiber.

In another embodiment, the present protein isolate is substantially free from starch, such as pea starch. For example, the present protein isolate comprises less than 5% (w/w) starch, preferably less than 1% (w/w) starch.

According to another aspect, the present invention relates to the use of the present protein isolate for manufacturing a food or beverage product. More preferably, the present invention relates to the use of the present protein isolate for manufacturing a plant-based food or beverage product.

In the context of the present invention, plant-based means not obtained directly from animals. In other words, plant-based may include plant-origin, algae origin, microbial origin, and obtained via precision fermentation, such as recombinant proteins.

Further, the present invention relates to the use of the present protein isolate for providing or increasing texture or gel strength in a food or beverage product. More preferably, the present invention relates to the use of the present protein isolate for providing or increasing texture or gel strength in a plant-based food or beverage product.

Preferably, the food product is chosen from the group consisting of plant-based yoghurt, plant-based beverages, plant-based cheese, plant-based cream, plant-based ice cream, plant-based pudding, plant-based custard, plant-based sausages, plant-based hamburger, plant-based nuggets, plant-based balls, spreads, dressings, sauces, cakes, cookies, nougat, meringue and other fine bakery products, protein bars and cereal bars.

Described herein is a food or beverage product comprising the present protein isolate. The food or beverage product comprises from 0.1 to 50% (w/w) protein isolate, such as from 0.5 to 30% (w/w), 1 to 25% (w/w), 2 to 20% (w/w), 3 to 15% (w/w) or 4 to 10% (w/w), of the food or beverage product.

The food product is chosen from the group consisting of plant-based yoghurt, plant-based beverages, plant-based cheese, plant-based cream, plant-based ice cream, plant-based pudding, plant-based custard, plant-based sausages, plant-based hamburger, plant-based nuggets, plant-based balls, spreads, dressings, sauces, cakes, cookies, nougat, meringue and other fine bakery products, protein bars and cereal bars.

According to another aspect the present invention relates to the use of rapeseed protein (isolate) for increasing the gel strength of a gel comprising pea protein (isolate). Preferably, for increasing the complex modulus G* of a gel comprising pea protein. More preferably to the use of rapeseed protein (isolate) for increasing the gel strength of a heat-set gel, preferably a heat-set gel made from a mixture of pea protein and an aqueous medium. More preferably the rapeseed protein is as defined herein, i.e. amongst others comprising the above indicated ranges of cruciferins and napins.

According to another aspect the present invention relates to the use of pea protein (isolate) for increasing the gel strength of a gel comprising rapeseed protein (isolate). Preferably, for increasing the complex modulus G* of a gel comprising rapeseed protein. More preferably to the use of pea protein (isolate) for increasing the gel strength of a heat-set gel, preferably a heat-set gel made from a mixture of rapeseed protein and an aqueous medium. More preferably the pea protein is as defined herein.

The present invention is further illustrated in the examples below.

### EXAMPLES

### Methods and materials

### Protein content

Protein content was determined by the Dumas method according to AOAC Official Method 991.20 Nitrogen (Total) in Milk, using a conversion factor of 6.25 was used to determine the amount of protein (% (w/w)).

### Rheometry

Dynamic oscillatory rheology was performed using an Anton Paar Physica rheometer MCR302 with a cup and bob geometry (CC27), and a program as displayed in table 1. During the measurements rheological data was obtained that is expressed as the complex modulus G* [Pa] and the phase angle [°]. The measurement was performed by filling the cup with 17-20 mL protein dispersion. To prevent samples from drying out during the experiment, the sample in the cup was covered with a thin layer of sunflower oil. The test program in detail: a temperature sweep was conducted, the sample was heated and then cooled over a temperature range of 25-95°C with steps 2°C per minute followed by a 10 minutes holding time at the final temperature of 95°C. A constant frequency of 1 Hz and strain of 0.1% were applied to collect data during the heat set and the cooling down phase. Rheological data were collected at 30 seconds intervals. After the gel was cooled, it was held at 25°C for 10 minutes now with a frequency of 0.1 Hz and strain of 0.1%. During this step, rheological data were collected at 1-minute intervals. Subsequently, a strain sweep was performed on the heat-set protein gel, using a constant frequency of 0.1 Hz and increasing strain from 0.1 to 100% at a constant temperature of 25°C.

**Table 1: Program settings of rheometer**

| Step | Temperat ure [°C] | Frequency [Hz] | Strain γ [%] | # of points | Time per point [s] | Total time of the phase [s] | Heating rate [°C/min] |
|---|---|---|---|---|---|---|---|
| 1 | 25 → 95°C | 1 | 0.1 | 70 | 30 | 2100 | 2 |
| 2 | 95°C | | | 20 | 30 | 600 | 0 |
| 3 | 95 → 25°C | | | 70 | 30 | 2100 | -2 |
| 4 | 25°C | 0.1 | | 10 | 60 | 600 | 0 |
| 5 | 25°C | | 0.1 → 100 logarithmically | 31 (10 points/ decade) | Set by rheometer | Set by rheometer | 0 |

From the rheological data the following typical parameters were extracted:
- Gel strength of the heat-set gel expressed as the complex modulus G* [Pa], obtained by the average of the first 10 points of the strain sweep - step 5, see table 1
- The phase angle, representing the ratio of the elastic and viscous component, was obtained by the average phase angle of the same points
- The linear viscoelastic region was obtained by determining the strain [%] in the strain sweep, step 5 in table 1, where the G* deviates more than 5% from the average G* as explained above.

### Pea protein isolate (PPI)

DMPP80Plus was obtained from JianYuan, China, containing more than 80% protein and less than 10% of moisture.

Nutralys F85F was obtained from Roquette, France, containing more than 83% protein and less than 10% of moisture.

Pisane C9 was obtained from Cosucra, Belgium, containing 88 +/- 2% protein and 5 +/- 2% of moisture.

### Rapeseed protein isolate (RPI)

Rapeseed protein isolate was prepared from cold-pressed rapeseed oil seed meal as described in WO 2018/007492; the protein content was 90% (w/w). The resultant rapeseed protein isolate comprised in the range of from 40 to 65% (w/w) cruciferins and 35 to 60% (w/w) napins, contained less than 0.26% (w/w) phytate and had a solubility of at least 88% when measured over a pH range 5 from 3 to 10 at a temperature of 23±2°C.

Rapeseed protein isolate Puratein^{®} (94% protein on dry matter, with less than 6% moisture) was obtained from Merit Functional Foods, Canada.

### Example 1

Protein mixtures (mix of dry powders) of various ratios of various types of pea protein isolate (PPI) and rapeseed protein isolate (RPI) were made with the ratio's as shown in the table 2. Pure protein isolates or the mixed protein isolates were dissolved in water in concentration (in powder weight, the protein purity is around 85-90%, the remaining part being moisture and for pea protein isolate also other components) as indicated in the table, and stirred for at least 60 minutes at 600 rpm, after which the pH was set to pH 6.8 using a dilute sodium hydroxide solution or a dilute hydrogen chloride solution. After equilibration, the rheometer cup was filled with the solution, after which the heat-set gelation procedure, described above, was executed. Most measurements were performed in triplicate. The data is collected in Table 2. To illustrate, the effect the strain sweep of three samples is shown in Figure 1. All the heat-set gel strengths for most 10% protein dispersions are shown in figure 2.

**Table 2 - ¹ highly variable data figures**

| **Sample** | **Concent ration protein isolate in water (%)** | **Composition of protein isolate** | | **G* (Pa)** | **SD** | **Phase Shift Angle (°)** | **SD** |
|---|---|---|---|---|---|---|---|
| | | **PPI (%)** | **RPI (%)** | | | | |
| **3.5%** | | | | | | | |
| DMPP80plus /RPI 80/20 | 3.5 | 80 | 20 | 19 | 9 | 12.9 | 0.9 |

| **5%** | | | | | | | |
|---|---|---|---|---|---|---|---|
| DMPP80plus /RPI 80/20 | 5 | 80 | 20 | **18** | 2 | 7,4 | 4,3 |
| RPI | 5 | 0 | 100 | 11 | | 7.5 | |

| **10%** | | | | | | | |
|---|---|---|---|---|---|---|---|
| DMPP80plus | 10 | 100 | 0 | 23 | 8 | 12,2 | 0,1 |
| DMPP80plus /RPI 90/10 | 10 | 90 | 10 | **183** | 61 | 9,4 | 0,1 |
| DMPP80plus /RPI 85/15 | 10 | 85 | 15 | **954** | 185 | 8.1 | |
| DMPP80plus /RPI 80/20 | 10 | 80 | 20 | **927** | 62 | 8,0 | 0,1 |
| DMPP80plus /RPI 75/25 | 10 | 75 | 25 | **248** | 71 | 7,9 | 0,1 |
| DMPP80plus /RPI 70/30 | 10 | 70 | 30 | **163** | 37 | 8,0 | 0,1 |
| DMPP80plus /RPI 60/40 | 10 | 60 | 40 | 138 | 3 | 7,9 | 0,0 |
| DMPP80plus /RPI 50/50 | 10 | 50 | 50 | 29 | 3 | 7,2 | 0,1 |
| RPI | 10 | 0 | 100 | 117 | 28 | 9.8 | 2.1 |
| DMPP80plus /Puratein^{®} 80/20 | 10 | 80 | 20 | **528** | 9 | 9,3 | 0,07 |
| Nutralys F85F¹ | 10 | 100 | 0 | 33 | 8,3 | 10,8 | 1,8 |
| Nutralys/RPI 80/20 | 10 | 80 | 20 | **749** | 421 | 9,2 | 0,4 |
| Pisane C9¹ | 10 | 100 | 0 | 37 | 29 | 11,1 | 1,7 |
| Pisane/RPI 80/20 | 10 | 80 | 20 | **235** | 5 | 9,4 | 0,1 |

| **20%** | | | | | | | |
|---|---|---|---|---|---|---|---|
| DMPP80plus | 20 | 100 | 0 | 2403 | 655 | 10,9 | 0,4 |
| DMPP80plus /RPI 80/20 | 20 | 80 | 20 | **11792** | 426 | 9,3 | 0,1 |
| RPI | 20 | 0 | 100 | 4467 | 16 | 7,8 | 0,19 |

The results collected in table 2 clearly show that a mixture of PPI and RPI forms a stronger heat-set gel than a heat-set gel made of only one of these components, and that the optimum lies in the range of a PPI/RPI ratio between 70:30 and 95:5. It also shows that this counts for pea protein isolates from various sources. And further it shows that the increase of gel strength also holds for enriched fractions of rapeseed protein isolate such as Puratein^{®}.

Furthermore, the table shows that the phase shift angles of all heat-set gels were low, below 15°, indicating that the elastic modulus was dominant, or, in other words, these all formed self-supporting gels. This holds even for the 80/20 mixture of PPI and RPI at 3.5% (w/w) powder (effectively 3.2% protein), whereas the single source proteins were not capable of making self-supporting gels at the low concentrations (no values to be obtained).

Further it shows that the mixtures commonly showed somewhat lower phase angles than the single source proteins at equal concentrations, indicating that the relative contribution of the elastic component to the overall gel strength is slightly higher for the protein mixtures.

Furthermore, figure 1 shows that the linear viscoelastic region (LVE) for the three samples presented differed substantially: the PPI gel failed around 4%, the PPI-RPI 80/20 mixture held until around 20% and the RPI alone reaches nearly 80%. The longer the better, a shorter linear viscoelastic region can always be obtained, making it longer is difficult.

### Example 2

Using the methods of example 1, heat set gels were made with protein composition having less than 80 wt. % protein, and with a protein composition comprising additionally protein fiber, as is shown in WO2021/009387. Additionally, heat set gels were made with alternative rapeseed protein isolates.

### Materials

Pea concentrate (PC) F55X was obtained from Vestkorn, Norway, containing 55% protein and less than 10% of moisture.

Pea fiber (PF) was Swelite^{™} pea fiber, obtained from Cosucra.

Puratein-G was obtained from Merit Functional Foods, Canada.

**Table 3**

| **Sample** | **Protein concent ration in powder (%)** | **Concentra tion protein powder in water (%)** | **Composition of protein powder** | | | **G* (Pa)** | **SD** | **Phase Shift Angle (°)** | **SD** |
|---|---|---|---|---|---|---|---|---|---|
| | | | **pea (%)** | **PF (%)** | **RPI (%)** | | | | |
| F55X | 55 | 10 | 100 | 0 | 0 | 21 | 6 | 12.4 | 0.8 |
| F55X /RPI 85/15 | 60.25 | 10 | 85 | 0 | 15 | 362 | 25 | 9.0 | 0.1 |
| PisaneC9/Swelite /RPI 70/20/10 | 70 | 10 | 70 | 20 | 10 | 270 | 45 | 8.4 | 0.1 |
| DMPP80plus /PurateinG 85/15 | 81.5 | 10 | 85 | 0 | 15 | **448** | 11 5 | 8.7 | 0.2 |

The above results show that using a protein content of less than 80% provide weaker heat set gels as the complex modulus (G*) is low. Further, using the composition of WO2021/009387, having 70% pea protein isolate, 20% pea fiber and 10% rapeseed protein isolate also provides weak heat-set gels.

## Claims

1. A protein isolate comprising at least 80% of protein on dry weight comprising pea protein and rapeseed protein, wherein the ratio of pea protein to rapeseed protein is within the range of 70:30 to 95:5 (w/w).

2. Protein isolate according to claim 1, wherein the ratio of pea protein to rapeseed protein is within the range of 75:25 to 90:10 (w/w).

3. Protein isolate according to claim 1 or claim 2, wherein at least 80% (w/w) of the protein in the protein isolate consists of pea protein and rapeseed protein.

4. Protein isolate according to any of the preceding claims, wherein the protein isolate in a 10% (w/w) aqueous solution has a heat-set gel strength with a complex modulus G* of at least 200 Pa according to rheology test 1.

5. Protein isolate according to claim 4, wherein rheology test 1 consists of:
- preparing a dispersion by dispersing the protein isolate in demineralized water to a concentration of 10% protein isolate and stirring for 60 minutes at 600 rpm at room temperature, followed by adjusting the pH to 6.8 using diluted NaOH or HCl;
- filling a rheometer with the prepared dispersion;
- determining the complex modulus G* during steps 1 to 5 using the following settings: and determine the gel strength as the complex modulus G* [Pa] from the linear viscoelastic region in step 5.
| Step | Temperat ure [°C] | Frequency [Hz] | Strain γ [%] | # of points | Time per point [s] | Total time of the phase [s] | Heating rate [°C/min] |
|---|---|---|---|---|---|---|---|
| 1 | 25 → 95°C | 1 | 0.1 | 70 | 30 | 2100 | 2 |
| 2 | 95°C | | | 20 | 30 | 600 | 0 |
| 3 | 95 → 25°C | | | 70 | 30 | 2100 | -2 |
| 4 | 25°C | 0.1 | | 10 | 60 | 600 | 0 |
| 5 | 25°C | | 0.1 → 100 logarithmically | 31 (10 points/ decade) | Set by rheometer | Set by rheometer | 0 |

6. Protein isolate according to any of the preceding claims, wherein the rapeseed protein comprises cruciferins and napins, preferably wherein the ratio of cruciferins to napins in the protein isolate is within the range of 10:90 to 95:5 (w/w).

7. Protein isolate according to any of the preceding claims, wherein the rapeseed protein comprises cruciferins and napins, wherein the ratio of cruciferins to napins in the protein isolate is within the range of 40:60 to 65:35 (w/w).

8. Protein isolate according to any of the claims 1 to 6, wherein the rapeseed protein comprises cruciferins and napins, wherein the ratio of cruciferins to napins in the protein isolate is within the range of 50:50 to 99:1 (w/w).

9. Protein isolate according to any of the preceding claims, having an amount of moisture of less than 10%.

10. Use of the protein isolate as defined in any of the claims 1 to 9 for manufacturing a food or beverage product.

11. Use of the protein isolate as defined in any of the claims 1 to 9 for providing texture in a food or beverage product.

12. Use according to claim 10 or claim 11, wherein the food product is chosen from the group consisting of plant-based yoghurt, plant-based beverages, plant-based cheese, plant-based cream, plant-based ice cream, plant-based pudding, plant-based custard, plant-based sausages, plant-based hamburger, plant-based nuggets, plant-based balls, spreads, dressings, sauces, cakes, cookies, nougat, meringue and other fine bakery products, protein bars and cereal bars.

13. Use of rapeseed protein for increasing the gel strength of a gel comprising pea protein.

14. Use of pea protein for increasing the gel strength of a gel comprising rapeseed protein.

## Patentansprüche

1. Proteinisolat umfassend wenigstens 80 % Protein nach Trockengewicht, umfassend Erbsenprotein und Rapsprotein, wobei das Verhältnis von Erbsenprotein zu Rapsprotein in dem Bereich von 70:30 bis 95:5 (Gew./Gew.) liegt.

2. Proteinisolat nach Anspruch 1, wobei das Verhältnis von Erbsenprotein zu Rapsprotein in dem Bereich von 75:25 bis 90:10 (Gew./Gew.) liegt.

3. Proteinisolat nach Anspruch 1 oder Anspruch 2, wobei wenigstens 80 % (Gew./Gew.) des Proteins in dem Proteinisolat aus Erbsenprotein und Rapsprotein bestehen.

4. Proteinisolat nach einem der vorstehenden Ansprüche, wobei das Proteinisolat in einer 10%-igen (Gew./Gew.) wässrigen Lösung eine wärmefixierte Gelfestigkeit mit einem komplexen Modul G* von wenigstens 200 Pa gemäß Rheologieprüfung 1 aufweist.

5. Proteinisolat nach Anspruch 4, wobei die Rheologieprüfung 1 aus Folgendem besteht:
- Herstellen einer Dispersion durch Dispergieren des Proteinisolats in entmineralisiertem Wasser auf eine Konzentration von 10 % Proteinisolat und 60 Minuten Rühren bei 600 U/min bei Raumtemperatur, gefolgt von Einstellen des pH-Werts auf 6,8 unter Verwendung von verdünnter NaOH oder HCl;
- Füllen eines Rheometers mit der hergestellten Dispersion;
- Bestimmen des komplexen Moduls G* während der Schritte 1 bis 5 unter Verwendung folgender Einstellungen; und Bestimmen der Gelfestigkeit als der komplexe Modul G* [Pa] aus dem linearen viskoelastischen Bereich bei Schritt 5.
| Schr itt | Temper atur [°C] | Frequ enz [Hz] | Dehnun g γ [%] | Anzahl von Punkten | Zeit pro Punkt [s] | Gesamt zeit der Phase [s] | Heizrate [°C/min] |
|---|---|---|---|---|---|---|---|
| 1 | 25 → 95 °C | 1 | 0,1 | 70 | 30 | 2100 | 2 |
| 2 | 95 °C | | | 20 | 30 | 600 | 0 |
| 3 | 95 → 25 °C | | | 70 | 30 | 2100 | -2 |
| 4 | 25 °C | 0,1 | | 10 | 60 | 600 | 0 |
| 5 | 25 °C | | 0, 1 → 100 logari thmisc h | 31 (10 Punkte/ Dekade) | Einge stell t durch Rheom eter | Einges tellt durch Rheome ter | 0 |

6. Proteinisolat nach einem der vorstehenden Ansprüche, wobei das Rapsprotein Cruciferine und Napine umfasst, wobei das Verhältnis von Cruciferinen zu Napinen in dem Proteinisolat vorzugsweise in dem Bereich von 10:90 bis 95:5 (Gew./Gew.) liegt.

7. Proteinisolat nach einem der vorstehenden Ansprüche, wobei das Rapsprotein Cruciferine und Napine umfasst, wobei das Verhältnis von Cruciferinen zu Napinen in dem Proteinisolat in dem Bereich von 40:60 bis 65:35 (Gew./Gew.) liegt.

8. Proteinisolat nach einem der Ansprüche 1 bis 6, wobei das Rapsprotein Cruciferine und Napine umfasst, wobei das Verhältnis von Cruciferinen zu Napinen in dem Proteinisolat in dem Bereich von 50:50 bis 99:1 (Gew./Gew.) liegt.

9. Proteinisolat nach einem der vorstehenden Ansprüche, das eine Feuchtigkeitsmenge von weniger als 10 % aufweist.

10. Verwendung des Proteinisolats nach einem der Ansprüche 1 bis 9 zur Herstellung eines Lebensmittel- oder Getränkeprodukts.

11. Verwendung des Proteinisolats nach einem der Ansprüche 1 bis 9 zum Verleihen von Textur an ein Lebensmittel- oder Getränkeprodukt.

12. Verwendung nach Anspruch 10 oder Anspruch 11, wobei das Lebensmittelprodukt ausgewählt ist aus der Gruppe bestehend aus Joghurt auf pflanzlicher Basis, Getränken auf pflanzlicher Basis, Käse auf pflanzlicher Basis, Sahne auf pflanzlicher Basis, Eiscreme auf pflanzlicher Basis, Pudding auf pflanzlicher Basis, Creme auf pflanzlicher Basis, Würsten auf pflanzlicher Basis, Hamburger auf pflanzlicher Basis, Nuggets auf pflanzlicher Basis, Bällchen auf pflanzlicher Basis, Aufstrichen, Dressings, Soßen, Kuchen, Keksen, Nougat, Meringue und anderen feinen Backwaren, Proteinriegeln und Getreideriegeln.

13. Verwendung von Rapsprotein zum Erhöhen der Gelfestigkeit eines Gels, das Erbsenprotein umfasst.

14. Verwendung von Erbsenprotein zum Erhöhen der Gelfestigkeit eines Gels, das Rapsprotein umfasst.

## Revendications

1. Isolat de protéines comprenant au moins 80 % de protéines en poids sec comprenant des protéines de pois et des protéines de colza, dans lequel le rapport des protéines de pois sur les protéines de colza est dans la plage de 70:30 à 95:5 (p/p).

2. Isolat de protéines selon la revendication 1, dans lequel le rapport des protéines de pois sur les protéines de colza est dans la plage de 75:25 à 90:10 (p/p).

3. Isolat de protéines selon la revendication 1 ou la revendication 2, dans lequel au moins 80 % (p/p) des protéines dans l'isolat de protéines est constitué de protéine de pois et de protéine de colza.

4. Isolat de protéines selon l'une quelconque des revendications précédentes, dans lequel l'isolat de protéines dans une solution aqueuse à 10 % (p/p) a une force de gel thermo-fixée avec un module complexe G* d'au moins 200 Pa selon le test rhéologique 1.

5. Isolat de protéines selon la revendication 4, dans lequel le test de rhéologie 1 consiste en :
- la préparation d'une dispersion par dispersion de l'isolat de protéines dans de l'eau déminéralisée jusqu'à une concentration de 10 % d'isolat de protéines et agitation pendant 60 minutes à 600 tpm à température ambiante, suivie par un ajustement du pH jusqu'à 6,8 en utilisant NaOH ou HCl dilué ;
- le remplissage d'un rhéomètre avec la dispersion préparée ;
- la détermination du module complexe G* lors des étapes 1 à 5 en utilisant les réglages suivants : et la détermination de la force de gel en tant que module complexe G* [Pa] à partir de la zone viscoélastique linéaire dans l'étape 5.
| Étap e | Tempér ature [°C] | Fréqu ence [Hz] | Contra inte γ [%] | nombre de points | Temps par point [s] | Temps total de la phase [s] | Vitesse de chauffag e [°C/min] |
|---|---|---|---|---|---|---|---|
| 1 | 25 → 95 °C | 1 | 0, 1 | 70 | 30 | 2100 | 2 |
| 2 | 95 °C | | | 20 | 30 | 600 | 0 |
| 3 | 95 → 25 °C | | | 70 | 30 | 2100 | -2 |
| 4 | 25 °C | 0, 1 | | 10 | 60 | 600 | 0 |
| 5 | 25 °C | | 0, 1 → 100 de manièr e logari thmiqu e | 31 (10 points/ interva lle de dix) | réglé par le rhéom ètre | réglé par le rhéomè tre | 0 |

6. Isolat de protéines selon l'une quelconque des revendications précédentes, dans lequel les protéines de colza comprennent des cruciférines et des napines, de préférence dans lequel le rapport de cruciférines sur napines dans l'isolat de protéines est dans la plage de 10:90 à 95:5 (p/p).

7. Isolat de protéines selon l'une quelconque des revendications précédentes, dans lequel les protéines de colza comprennent des cruciférines et des napines, dans lequel le rapport de cruciférines sur napines dans l'isolat de protéines est dans la plage de 40:60 à 65:35 (p/p).

8. Isolat de protéines selon l'une quelconque des revendications 1 à 6, dans lequel les protéines de colza comprennent des cruciférines et des napines, dans lequel le rapport de cruciférines sur napines dans l'isolat de protéines est dans la plage de 50:50 à 99:1 (p/p).

9. Isolat de protéines selon l'une quelconque des revendications précédentes, ayant une quantité d'humidité inférieure à 10 %.

10. Utilisation de l'isolat de protéines tel que défini dans l'une quelconque des revendications 1 à 9 pour la fabrication d'un produit alimentaire ou de boisson.

11. Utilisation de l'isolat de protéines tel que défini dans l'une quelconque des revendications 1 à 9 pour fournir une texture dans un produit alimentaire ou de boisson.

12. Utilisation selon la revendication 10 ou la revendication 11, dans laquelle le produit alimentaire est choisi dans le groupe constitué par un yaourt végétal, des boissons végétales, un fromage végétal, une crème végétale, une glace végétale, un pudding végétal, une crème pâtissière végétale, des saucisses végétales, un hamburger végétal, des pépites végétales, des boules végétales, des pâtes à tartiner, des vinaigrettes, des sauces, des gâteaux, des biscuits, un nougat, une meringue et d'autres produits de boulangerie fine, des barres protéinées et des barres céréalières.

13. Utilisation de protéines de colza pour augmenter la force de gel d'un gel comprenant des protéines de pois.

14. Utilisation de protéines de pois pour augmenter la force de gel d'un gel comprenant des protéines de colza.
